# EUROPÄISCHE PATENTSCHRIFT

(11) **EP 4 540 123 B1**
(45) Veröffentlichungstag und Bekanntmachung des Hinweises auf die Patenterteilung: **17.12.2025**
(21) Anmeldenummer: 23732083.3
(22) Anmeldetag: 09.06.2023
(51) Int. Cl.: B62D 15/02

(54) **ANTRIEBSEINHEIT FÜR EINEN RADAKTUATOR EINES STEER-BY-WIRE-SYSTEMS FÜR EIN FAHRZEUG UND EIN VERFAHREN ZUM BESTIMMEN EINER POSITION DER STEUERSTANGE EINES RADAKTUATORS**
DRIVE UNIT FOR A WHEEL ACTUATOR OF A STEER-BY-WIRE SYSTEM FOR A VEHICLE, AND METHOD FOR DETERMINING THE POSITION OF THE CONTROL ROD OF A WHEEL ACTUATOR
UNITÉ D'ENTRAÎNEMENT POUR UN ACTIONNEUR DE ROUE D'UN SYSTÈME DE DIRECTION À COMMANDE ÉLECTRIQUE POUR UN VÉHICULE, ET PROCÉDÉ DE DÉTERMINATION DE LA POSITION DE LA BIELLETTE DE COMMANDE D'UN ACTIONNEUR DE ROUE

(30) Priorität: 15.06.2022 DE 102022206066
(43) Veröffentlichungstag der Anmeldung: 23.04.2025
(73) Patentinhaber: VOLKSWAGEN AKTIENGESELLSCHAFT, 38440 Wolfsburg (DE)
(72) Erfinder: KREIS, Christopher, 38126 Braunschweig (DE); LEIBEL, Wassili, 29640 Schneverdingen (DE); SACHS, Tobias, 38176 Wendeburg (DE)
(86) Internationale Anmeldenummer: PCT/EP2023/065542
(87) Internationale Veröffentlichungsnummer: WO 2023/242068

(56) Entgegenhaltungen:
- DE-B4- 102005 058 224
- US-B2- 11 072 361

## Beschreibung

Die Erfindung betrifft eine Antriebseinheit für einen Radaktuator eines Steer-by-Wire-Systems für ein Fahrzeug. Ferner betrifft die Erfindung einen korrespondierenden Radaktuator für ein Steer-by-Wire-System eines Fahrzeuges. Weiterhin betrifft die Erfindung ein korrespondierendes Steer-by-Wire-System für ein Fahrzeug sowie ein entsprechendes Fahrzeug. Des Weiteren betrifft die Erfindung ein Verfahren zum Bestimmten einer Position der Steuerstange eines Radaktuators mithilfe einer korrespondierenden Antriebseinheit.

Zukünftige Lenksysteme der Steer-by-Wire-Bauart benötigen keine Lenkzwischenwelle zwischen einem Lenkrad und einer Spurstange bzw. einer Steuerstange, da die mechanische Verbindung zum Lenkrad entfällt. Das Lenkgefühl am Lenkrad wird bei solchen Systemen von einem Force-Feedback Aktuator bereitgestellt, der direkt oder über ein Getriebe mit dem Lenkrad verbunden ist. Aufgrund der fehlenden mechanischen Verbindung zum Lenkrad muss die Position der Spurstange hochgenau und unter Berücksichtigung höchster Sicherheitsanforderungen eingeregelt werden. Dazu ist es erforderlich, die Position der Spurstange zu jedem Zeitpunkt eindeutig ermitteln zu können.

Um die Position der Spurstange zu jedem Zeitpunkt eindeutig und mit höchster Sicherheitsintegrität ermitteln zu können, können zwei Sensoren verwendet werden. Bei bekannten mechanischen Systemen kann ein Sensor im Powerpack und ein Sensor an der Lenksäule angeordnet werden, die Referenzsignale für die Position der Spurstange bereitstellen können.

Bei Steer-by-Wire-Systemen ist die Lenksäule nicht mehr vorhanden. Ein Verbau eines "Wellenstummels" mit einem Sensor an deren Stelle ist technisch möglich, allerdings nicht effizient im Sinne eines einfachen und wirtschaftlichen Systemaufbaus.

Die US 11,072,361 B2 offenbart eine Antriebseinheit mit Merkmalen des Oberbegriffs des Anspruchs 1 für ein Steer-by-Wire-System; darüber hinaus offenbart die DE 10 2005 058 224 B4 ebenfalls eine Antriebseinheit mit Merkmalen des Oberbegriffs des Anspruchs 1.

Der Erfindung liegt daher eine Aufgabe zugrunde, eine verbesserte Antriebseinheit (sog. Powerpack) für einen Radaktuator eines Steer-by-Wire-Systems für ein Fahrzeug bereitzustellen, die eine zuverlässige, genaue und sichere Bestimmung der Position der Spurstange ermöglicht. Ferner liegt der Erfindung eine Aufgabe zugrunde, einen verbesserten Radaktuator für ein Steer-by-Wire-System eines Fahrzeuges bereitzustellen. Weiterhin liegt der Erfindung eine Aufgabe zugrunde, ein verbessertes Steer-by-Wire-System für ein Fahrzeug sowie ein entsprechendes Fahrzeug zur Verfügung zu stellen. Des Weiteren liegt der Erfindung eine Aufgabe zugrunde, ein verbessertes, insbesondere im Hinblick auf die Ausfallsicherheit, Verfahren zum Bestimmten einer Position der Steuerstange eines Radaktuators mithilfe einer korrespondierenden Antriebseinheit bereitzustellen.

Die erfindungsgemäße Aufgabe wird gelöst durch: eine Antriebseinheit für einen Radaktuator eines Steer-by-Wire-Systems für ein Fahrzeug mit den Merkmalen des unabhängigen Vorrichtungsanspruches, einen Radaktuator für ein Steer-by-Wire-System eines Fahrzeuges mit den Merkmalen des nebengeordneten unabhängigen Vorrichtungsanspruches, ein korrespondierendes Steer-by-Wire-System für ein Fahrzeug mit den Merkmalen des unabhängigen Systemanspruches, ein entsprechendes Fahrzeug mit den Merkmalen des weiteren nebengeordneten unabhängigen Vorrichtungsanspruches und ein Verfahren zum Bestimmten einer Position der Steuerstange eines Radaktuators mit den Merkmalen des unabhängigen Verfahrensanspruches.

Die Erfindung stellt bereit: eine Antriebseinheit (sog. Powerpack, bspw. inklusive eines Motors und einer Steuervorrichtung) für einen Radaktuator (ein Teil des Steer-by-Wire-Systems an der Fahrzeugachse) eines Steer-by-Wire-Systems für ein Fahrzeug. Die Antriebseinheit weist dabei auf:
- einen Motor zum Bereitstellen einer Antriebsleistung an eine Steuerstange des Radaktuators,
   wobei insbesondere die Steuerstange ebenfalls Spurstange genannt werden kann, wobei bspw. die Steuerstange unterschiedliche Ausführungen je nach der Ausführung des Radaktuators aufweisen kann, und bspw. eine Zahnstange, eine Hubstange o. Ä. umfassen kann,
- eine Sensorvorrichtung zum Bestimmen einer Position der Steuerstange,
   wobei die Sensorvorrichtung eine erste Sensoreinheit und mindestens eine zweite Sensoreinheit (denkbar sind zwei oder mehrere zweite bzw. sekundäre Sensoreinheiten) aufweist,
   wobei die erste Sensoreinheit dazu ausgeführt ist, einen Winkel einer Rotorwelle des Motors zu erfassen,
   und wobei die zweite Sensoreinheit dazu ausgeführt ist, einen Winkel einer Hilfswelle zu erfassen, die mit der Rotorwelle in einer mechanischen Wirkverbindung angeordnet ist,
- eine Getriebevorrichtung zum Bereitstellen der mechanischen Wirkverbindung zwischen der Rotorwelle und der Hilfswelle,
   wobei insbesondere die Wirkverbindung zwischen der Rotorwelle und der Hilfswelle derart bereitgestellt wird, dass vorzugsweise der Drehwinkel der Rotorwelle und der Drehwinkel der Hilfswelle über den Hubweg der Steuerstange ein bestimmtes Winkelverhältnis aufweisen,
- und eine Steuervorrichtung zum Ansteuern der Sensorvorrichtung und/oder zum Bestimmten einer Position der Steuerstange des Radaktuators,
   wobei die erste Sensoreinheit und die zweite Sensoreinheit unterschiedliche Messprinzipien aufweisen.

Die erfindungsgemäße Lösung sieht zwei Sensoreinheiten, bzw. zwei Sensoren, innerhalb der Antriebseinheit bzw. des Powerpacks vor. Die Sensoren dienen zum genauen Bestimmen der Position der Steuerstange zu jedem Zeitpunkt, wobei die Rotorwelle über einen möglichen Hubweg bzw. Verstellweg der Steuerstange mehreren Umdrehungen ausführen kann.

Bspw. können die zwei Sensoreinheiten nach dem Noniusprinzip ausgeführt sein. Das Noniusprinzip kann bspw. durch zwei Sensorwerte realisiert werden, die sich bei Drehung des Motors so verändern, dass die Position der Steuerstange über zwei Sensorwerte über den gesamten Hub eindeutig bestimmt werden kann. Dabei können ein Magnet (als erster Signalgeber) drehfest an der Rotorwelle des Motors und eine Fächerscheibe für einen Induktivsensor (als zweiter Signalgeber) drehfest an einer Hilfswelle befestigt werden. Die Wirkverbindung, bspw. in Form einer Drehwinkel-Beziehung bzw. eines Winkelverhältnisses, zwischen den beiden Signalgebern kann über zwei miteinander kämmende Stirnräder im Rahmen der Getriebevorrichtung realisiert werden, die an der Rotorwelle und der Hilfswelle drehfest befestigt sind und die jeweils einen Signalgeber tragen. Das Stirnrad auf der Hilfswelle kann eine kleinere Zahnanzahl aufweisen als das Stirnrad an der Rotorwelle, sodass eine Übersetzung bereitgestellt werden kann und der Winkel der Rotorwelle und der Winkel der Hilfswelle eine eindeutige Beziehung zueinander haben.

Die Stirnräder der Getriebevorrichtung können auf vorteilhafte Weise mit der Motorwelle in ein Motorgehäuse montiert werden. Die Sensoren (als Signaldetektoren) können auf vorteilhafte Weise direkt auf einer Platine der Steuervorrichtung angeordnet werden.

Der Radaktuator kann dabei auf der Steuerstange angeordnet werden oder beabstandet dazu, bspw. parallel.

Erfindungsgemäß weisen die Sensoreinheiten unterschiedliche Messprinzipien bzw. Sensorprinzipien auf. Auf diese Weise können sicherheitstechnische Vorteile erzielt werden. Das führt dazu, dass bei einer äußeren Einwirkung (z. B. durch elektromagnetische Wellen) ein gleichzeitiger Ausfall beider Sensoreinheiten vermieden wird, was bei identischem Sensorprinzip der Fall sein könnte. Des Weiteren kann eine gegenseitige Beeinflussung der Sensoren (z. B. Übersprechen der Signale) vermieden werden.

Die erste Sensoreinheit kann eine primäre Funktion für die Motorregelung bereitstellen und hierzu eine höhere Auflösung als die zweite Sensoreinheit aufweisen.

Die zweite Sensoreinheit kann eine sekundäre und/oder redundante Funktion für die Motorregelung bereitstellen und ggf. eine niedrigere Auflösung als die erste Sensoreinheit aufweisen. Die Auflösung des zweiten Sensors kann dabei so gewählt werden, dass die Motorregelung auch auf Basis von dessen Signal erfolgen kann, dabei muss die Motorregelung aber nicht höchsten Ansprüchen an Akustik und Haptik genügen. Ziel der zweiten Sensoreinheit kann eine Aufrechterhaltung der Funktion/Verfügbarkeit der Motorregelung sein.

Ein Vorteil von zwei Sensoreinheiten kann weiterhin darin liegen, dass die gegenseitige Überwachung und/oder Plausibilisierung der Sensoreinheiten im Normalbetrieb ermöglicht wird. Diese kann unter anderen folgende Umfänge haben:
- Plausibilisierung von Winkelsignalen von der ersten Sensoreinheit zu der zweiten Sensoreinheit und umgekehrt, bspw. mithilfe eines Verhältnisses zwischen den Winkelsignalen.
- Plausibilisierung der nach dem Noniusprinzip errechneten Steuerstangenposition gegenüber weiteren im Fahrzeug vorliegenden Signalen, aus denen sich der Lenkwinkel berechnen lässt (z. B. Gierrate, Einzelraddrehzahlen, externe Sensoren usw.).
- Wenn die Sensoren mehrkanalig aufgebaut sind, kann die Plausibilisierung auch die jeweiligen Einzelkanäle der Sensoren einzeln berücksichtigen.

Sollte es zu einem Ausfall des primären Sensors kommen, so kann der zweite Sensor die Positionsbestimmung der Steuerstange übernehmen.

Wenn der zweite Sensor eine geringere Auflösung bzw. Signalqualität aufweist als der erste Sensor, kann es vorteilhaft sein, das Regelverhalten der Motorregelung anzupassen. Dies kann u. A. auf mehrere Arten geschehen:
- Reduzierung der Dynamik des übergeordneten Regelkreises (Zahnstangenpositionsregelung);
- Zuschalten einer Dämpfungskomponente auf das Signal (z. B. Tiefpassfilter);
- Begrenzung von Gradienten und Amplituden des Signals (Soll-Zahnstangenposition)
- Umschalten auf andere Regler-Parametrierung, die für den Betrieb mit diesem Sensor angepasst wurde.

Vorteilhaft für eine hochgenaue Berechnung der Zahnstangenposition kann sein, wenn die Position der Steuerstange aus beiden Sensoren beim Systemstart vorliegt. Nach einem folgenden Teilausfahl der Sensoren kann die Weiterberechnung der Position der Steuerstange auch nur mit dem Signal erfolgen. Eine Zählung der Wellenumdrehungen kann dabei bspw. zusätzlich in die Weiterberechnung einfließen.

Die Berechnung der Winkel auf Basis des Offsetwertes vom Start kann vorteilhafterweise im Normalfall in Hintergrund laufen, sodass der Wert im Normalbetrieb ständig verfügbar ist und auch gegen die anderen verfügbaren Signale entsprechend der oben beschriebenen Methoden plausibilisiert werden kann.

Des Weiteren kann vorteilhaft sein, das eine oder mehrere der berechneten Winkel- bzw. Positionsinformationen inkl. eines zugeordneten Signals zum Status der Plausibilisierung auf einem oder mehreren Fahrzeugbussystemen zur Nutzung von anderen Steuergeräten im Fahrzeug gesendet wird.

Ferner kann vorgesehen sein, dass die erste Sensoreinheit einen ersten Signalgeber, welcher drehfest mit der Rotorwelle verbunden ist, und einen ersten Sensor, welcher insbesondere axial gesehen stirnseitig vor der Rotorwelle und gegenüber dem ersten Signalgeber angeordnet ist, aufweist. Weiterhin kann vorgesehen sein, dass die zweite Sensoreinheit einen zweiten Signalgeber, welcher drehfest mit der Hilfswelle verbunden ist, und einen zweiten Sensor, welcher insbesondere axial gesehen stirnseitig vor der Hilfswelle und gegenüber dem zweiten Signalgeber angeordnet ist, aufweist. Somit kann ermöglicht werden, dass die Sensoreinheiten das Noniusprinzip nutzen können, um in jedem Zeitpunkt eine genaue Position der Steuerstange über deren gesamten Steuerweg bestimmen zu können.

Vorteilhafterweise kann der erste Sensor und/oder der zweite Sensor an der Steuervorrichtung angeordnet sein. Auf diese Weise kann die Verschaltung der Sensoren vereinfacht und die Integration in das Powerpack ermöglicht werden.

Des Weiteren kann es vorteilhaft sein, wenn die erste Sensoreinheit eine höhere Auflösung und/oder Signalqualität aufweist als die zweite Sensoreinheit. Auf diese Weise kann die erste Sensoreinheit eine primäre Funktion bei der Motorsteuerung bereitstellen.

Zudem ist es denkbar, dass die erste Sensoreinheit und die zweite Sensoreinheit jeweils mindestens einen von den folgenden Sensoren aufweisen können:
- einen induktiven Sensor,
- einen magnetoresistiven Sensor,
- einen Hall-Sensor,
- einen Drehwinkelsensor, usw.

Somit können etablierte Sensoren auf eine vorteilhafte Weise zur Winkelbestimmung verwendet werden.

Außerdem ist es denkbar, dass die erste Sensoreinheit und die zweite Sensoreinheit jeweils mindestens eine von den folgenden Messprinzipien aufweisen können:
- elektromechanisch,
- magnetisch,
- induktiv,
- optisch, usw.

Somit können etablierte Messprinzipien auf eine vorteilhafte Weise zur Winkelbestimmung verwendet werden.

Ferner kann vorgesehen sein, dass die Getriebevorrichtung ein Hauptgetriebeelement, insbesondere in Form eines Zahnrads, vorzugsweise eines Stirnrads, aufweist, welches drehfest mit der Rotorwelle verbunden ist und an welchem der erste Signalgeber befestigt ist. Weiterhin kann vorgesehen sein, dass die Getriebevorrichtung mindestens ein Hilfsgetriebeelement, insbesondere in Form eines Zahnrads, vorzugsweise eines Stirnrads, aufweist, welches drehfest mit der Hilfswelle verbunden ist und an welchem der zweite Signalgeber befestigt ist. Auf diese Weise kann eine bestimmte Übersetzung zwischen den Zahnrädern bereitgestellt werden. Die Übersetzung zwischen den Zahnrädern kann vorteilhaft sein, um eine Wirkverbindung zwischen der Rotorwelle und der Hilfswelle zu ermöglichen, sodass insbesondere die Drehwinkel der Rotorwelle und der Hilfswelle über den Hubweg der Steuerstange ein bestimmtes Verhältnis aufweisen. Somit kann eine genaue Positionsbestimmung der Steuerstange nach dem Noniusprinzip ermöglicht werden.

Vorteilhafterweise kann die Steuervorrichtung eine erste Steuereinheit und eine zweite Steuereinheit aufweisen. Somit kann eine Ausfallsicherheit bei der Ansteuerung der Sensoren ermöglicht werden.

Des Weiteren kann es vorteilhaft sein, wenn die erste Sensoreinheit mindestens einen Kanal zu einer ersten Steuereinheit und mindestens einen Kanal zu einer zweiten Steuereinheit aufweist. Zudem kann es vorteilhaft sein, wenn die zweite Sensoreinheit mindestens einen Kanal zu einer ersten Steuereinheit und gegebenenfalls einen Kanal zu einer zweiten Steuereinheit aufweist. Auf diese Weise kann eine Ausfallsicherheit der Kanäle ermöglicht werden, sodass die Ausfallsicherheit bei der Winkelbestimmung noch weiter erhöht wird.

Ferner stellt die Erfindung bereit: einen Radaktuator für ein Steer-by-Wire-System eines Fahrzeuges, aufweisend eine Steuerstange zum Umsetzen einer Lenkanforderung und eine Antriebseinheit zum Bereitstellen einer Antriebsleistung an die Steuerstange, um die Lenkanforderung umzusetzen, wobei die Antriebseinheit wie oben beschrieben ausgeführt sein kann. Mithilfe des erfindungsgemäßen Radaktuators können die gleichen Vorteile erreicht werden wie mithilfe der Antriebseinheit. Auf diese Vorteile wird vorliegend vollumfänglich Bezug genommen.

Weiterhin stellt die Erfindung bereit: ein Steer-by-Wire-System für ein Fahrzeug mit einem korrespondieren Radaktuator. Mithilfe des erfindungsgemäßen Steer-by-Wire-Systems können die gleichen Vorteile erreicht werden wie mithilfe der Antriebseinheit. Auf diese Vorteile wird vorliegend vollumfänglich Bezug genommen.

Des Weiteren stellt die Erfindung bereit: ein Fahrzeug, insbesondere ein hochautomatisiert und/oder autonom fahrendes Fahrzeug, welches ggf. über kein Lenkrad verfügt oder verfügen muss, mit einem korrespondieren Steer-by-Wire-System. Mithilfe des erfindungsgemäßen Fahrzeugs können die gleichen Vorteile erreicht werden wie mithilfe der Antriebseinheit. Auf diese Vorteile wird vorliegend vollumfänglich Bezug genommen.

Ferner stellt die Erfindung bereit: ein Verfahren zum Bestimmten einer Position der Steuerstange eines Radaktuators mithilfe einer Antriebseinheit, wobei die Antriebseinheit wie oben beschrieben ausgeführt sein kann. Das Verfahren weist folgende
Aktionen/Verfahrensschritte auf:
- Verwenden der ersten Sensoreinheit, um einen Winkel der Rotorwelle des Motors zu erfassen,
- Verwenden der zweiten Sensoreinheit, um einen Winkel der Hilfswelle zu erfassen,
- Bestimmten einer Position der Steuerstange des Radaktuators mithilfe von Messwerten der ersten Sensoreinheit und/oder mithilfe von Messwerten der zweiten Sensoreinheit.

Mithilfe des erfindungsgemäßen Verfahrens können die gleichen Vorteile erreicht werden wie mithilfe der Antriebseinheit. Auf diese Vorteile wird vorliegend vollumfänglich Bezug genommen.

Vorteilhafterweise können die Messwerte der ersten Sensoreinheit zum Plausibilisieren der Messwerte der zweiten Sensoreinheit verwendet werden.

Um eine vorteilhafte Positionsbestimmung der Steuerstange mit erhöhter Genauigkeit durchführen zu können, können verfügbare Messwerte der ersten Sensoreinheit und/oder verfügbare Messwerte der zweiten Sensoreinheit kombiniert werden.

Vorteilhafterweise kann bei einem Start des Fahrzeuges ein Offset zwischen Messwerten der ersten Sensoreinheit und den Messwerten der zweiten Sensoreinheit (bspw. in Form eines Winkelverhältnisses) bestimmt werden, um bei einem Ausfall einer der Sensoreinheiten eine Bestimmung der Position der Steuerstange mit nur einer Sensoreinheit weiterhin durchführen zu können. Hierzu kann ein verfügbarer Messwert genutzt werden, die bspw. durch eine Umdrehungszählung unterstützt werden kann, um die Position der Steuerstange zu bestimmen.

Besonders vorteilhaft kann die Bestimmung der Position der Steuerstange mithilfe eines Offsets zwischen Messwerten der ersten Sensoreinheit und den Messwerten der zweiten Sensoreinheit parallel zum primären Bestimmen der Position der Steuerstange (bspw. mithilfe der beiden Messwerte, z. B. nach dem Noniusprinzip) durchgeführt werden, um bei einem Ausfall einer der Sensoreinheiten eine Bestimmung der Position der Steuerstange mit nur einer Sensoreinheit, insbesondere unverzüglich, bereitstellen zu können.

Weiterhin kann es vorteilhaft sein, dass, wenn die erste Sensoreinheit und/oder die zweite Sensoreinheit ausfällt, ein Regelverfahren für eine Regelung des Motors angepasst wird, wobei insbesondere, wenn die erste Sensoreinheit ausfällt, mindestens eine von den folgenden Maßnahmen durchgeführt wird:
- Reduktion einer Dynamik für eine übergeordnete Regelung, insbesondere einer Regelung der Position der Steuerstange,
- Zuschalten einer Dämpfungskomponente, bspw. eines Tiefpassfilters, auf ein Signal der zweiten Sensoreinheit,
- Begrenzen von Gradienten und/oder Amplituden eines Signals für eine Sollposition der Steuerstange,
- Anpassen von Regelparameter für die Regelung des Motors und/oder für die Regelung der Position der Steuerstange.

Auf diese Weise kann eine verbesserte Regelung des Motors und/oder Regelung der Position der Steuerstange trotz des Ausfalls einer der Sensoreinheiten bereitgestellt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigt:
- Fig. 1: eine beispielhafte Darstellung eines Fahrzeuges mit einem Steer-by-Wire-System,
- Fig. 2: eine stirnseitige Ansicht auf einen Motor einer Antriebseinheit für einen Radaktuator,
- Fig.3: eine beispielhafte Darstellung einer Sensorvorrichtung einer Antriebseinheit für einen Radaktuator, und
- Fig. 4: eine beispielhafte Darstellung einer Sensorvorrichtung einer Antriebseinheit für einen Radaktuator.

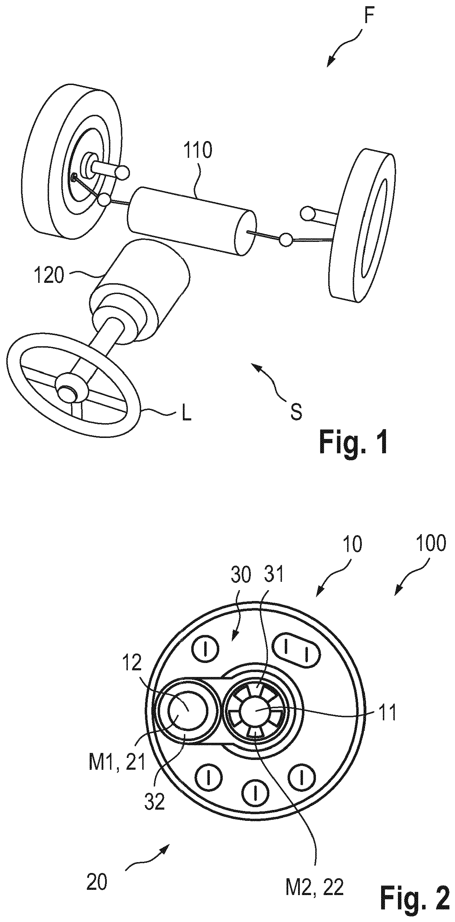

Die Fig. 1 bis 4 dienen zum Erklären des Erfindungsgedanken. Die Fig. 1 zeigt ein beispielhaftes Lenksystem der Steer-by-Wire-Bauart oder kurz genannt ein Steer-by-Wire-System S für ein Fahrzeug F. Ein solches Steer-by-Wire-System S benötigt keine Lenkzwischenwelle zwischen einem Lenkrad L und einer Spurstange bzw. einer Steuerstange, da die mechanische Verbindung zum Lenkrad L entfällt. Das Lenkgefühl am Lenkrad L kann bei einem solchen Steer-by-Wire-System S von einem Force-Feedback Aktuator 120 bereitgestellt werden, der direkt oder über ein Getriebe mit dem Lenkrad L verbunden ist. Aufgrund der fehlenden mechanischen Verbindung zum Lenkrad L muss die Position der Spurstange hochgenau und unter Berücksichtigung höchster Sicherheitsanforderungen eingeregelt werden.

Um die Position der Spurstange bzw. der Steuerstange zu jedem Zeitpunkt eindeutig ermitteln zu können, schlägt die Erfindung vor (vgl. Fig. 2 bis 4): eine Antriebseinheit 100 (sog. Powerpack, bspw. inklusive eines Motors und einer Steuervorrichtung) für einen Radaktuator 110 eines Steer-by-Wire-Systems S für ein Fahrzeug F. Die Antriebseinheit 100 weist dabei auf:
- einen Motor 10 zum Bereitstellen einer Antriebsleistung an eine Steuerstange des Radaktuators 110,
   wobei insbesondere die Steuerstange unterschiedliche Ausführungen je nach der Ausführung des Radaktuators 110 aufweisen kann, und bspw. eine Zahnstange, eine Hubstange o. Ä. umfassen kann, wobei die Fig. 1 den Radaktuator 110 lediglich bspw. auf der Steuerstange zeigt, wobei der Radaktuator 110 alternativ zu Fig. 1 beabstandet zur Steuerstange angeordnet sein kann, wobei vorzugsweise der Radaktuator 110 über ein Getriebe mit der Steuerstange verbunden sein kann.
- eine Sensorvorrichtung 20 zum Bestimmen einer Position der Steuerstange
   wobei die Sensorvorrichtung 20 eine erste Sensoreinheit 21 und mindestens eine zweite (denkbar sind eine oder mehrere zweite bzw. sekundäre) Sensoreinheit(en) 22 aufweist, wobei die erste Sensoreinheit 21 dazu ausgeführt ist, einen Winkel einer Rotorwelle 11 des Motors 10 zu erfassen,
   und wobei die zweite Sensoreinheit 22 dazu ausgeführt ist, einen Winkel einer Hilfswelle 12 zu erfassen, die mit der Rotorwelle 11 in einer mechanischen Wirkverbindung angeordnet ist,
- eine Getriebevorrichtung 30 zum Bereitstellen der mechanischen Wirkverbindung zwischen der Rotorwelle 11 und der Hilfswelle 12,
   wobei insbesondere die Wirkverbindung zwischen der Rotorwelle 11 und der Hilfswelle 12 derart bereitgestellt wird, dass vorzugsweise der Drehwinkel der Rotorwelle 11 und der Drehwinkel der Hilfswelle 12 über den Hubweg der Steuerstange hinweg ein bestimmtes Winkelverhältnis aufweisen,
- und eine Steuervorrichtung 40 zum Ansteuern der Sensorvorrichtung 20 und/oder zum Bestimmten einer Position der Steuerstange des Radaktuators 110.
   wobei die erste Sensoreinheit 21 und die zweite Sensoreinheit 22 unterschiedliche Messprinzipien aufweisen.

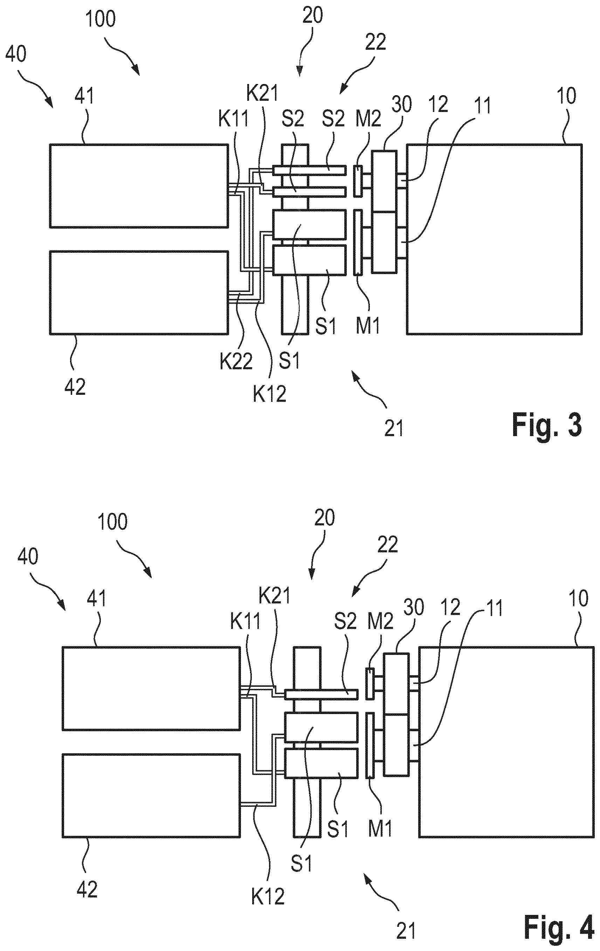

Wie es die Fig. 3 und 4 verdeutlichen, sind zwei Sensoreinheiten 21, 22 bei der Sensorvorrichtung 20 vorgesehen. Die zwei Sensoreinheiten 21, 22 können entsprechend zwei Sensoren S1, S2 aufweisen. Die Sensoreinheiten 21, 22 können vorteilhafterweise innerhalb der Antriebseinheit 100 verbaut sein, insbesondere innerhalb eines Gehäuses (nicht dargestellt) der Antriebseinheit 100. Die Sensoren S1, S2 dienen zum genauen Bestimmen der Position der Steuerstange zu jedem Zeitpunkt, wobei die Rotorwelle 11 über einen möglichen Hubweg bzw. Verstellweg der Steuerstange mehreren Umdrehungen ausführen kann.

Vorteilhafterweise können die zwei Sensoreinheiten 21, 22 nach dem Noniusprinzip ausgeführt sein. Das Noniusprinzip kann bspw. durch zwei Sensorwerte realisiert werden, die sich bei Drehung des Motors 10 so verändern, dass die Position der Steuerstange über zwei Sensorwerte über den gesamten Hub eindeutig bestimmt werden kann. Dabei können bspw. ein Magnet (als erster Signalgeber M1) drehfest an der Rotorwelle 11 des Motors 10 und bspw. eine Fächerscheibe für einen Induktivsensor (als zweiter Signalgeber M2) drehfest an einer Hilfswelle 12 befestigt werden. Die Wirkverbindung, bspw. in Form einer Drehwinkel-Beziehung bzw. eines Winkelverhältnisses, zwischen den beiden Signalgebern M1, M2 kann über zwei miteinander kämmende Getriebeelemente 31, 32, bspw. in Form von Stirnrädern, im Rahmen der Getriebevorrichtung 30 realisiert werden, die entsprechend an der Rotorwelle 11 und der Hilfswelle 12 drehfest befestigt sind und die jeweils einen Signalgeber M1, M2 tragen. Das Stirnrad auf der Hilfswelle 12 kann bspw. eine kleinere Zahnanzahl aufweisen als das Stirnrad an der Rotorwelle 11, sodass eine Übersetzung bereitgestellt werden kann und der Winkel der Rotorwelle 11 und der Winkel der Hilfswelle 12 eine eindeutige Beziehung bzw. ein eindeutiges Verhältnis zueinander haben.

Die Getriebeelemente 31, 32 der Getriebevorrichtung 30 können auf vorteilhafte Weise mit der Rotorwelle 11 in ein Gehäuse (nicht dargestellt) der Antriebseinheit 100 montiert werden. Die Sensoren S1, S2 (als Signaldetektoren) können auf vorteilhafte Weise direkt auf einer Platine der Steuervorrichtung 40 angeordnet werden.

Gemäß der Erfindung weisen die Sensoreinheiten 21, 22 unterschiedliche Messprinzipien bzw. Sensorprinzipien auf:
- elektromechanisch,
- magnetisch,
- induktiv,
- optisch, usw.

Die Sensoreinheiten 21, 22 können folgende jeweils unterschiedliche Sensoren S1, S2 aufweisen:
- einen induktiven Sensor (Bsp. für den ersten Sensor S1),
- einen magnetoresistiven Sensor (Bsp. für den zweiten Sensor S2),
- einen Hall-Sensor,
- einen Drehwinkelsensor, usw.

Mithilfe von unterschiedlichen Messprinzipien können sicherheitstechnische Vorteile erzielt werden, sodass bei einer äußeren Einwirkung (z. B. durch elektromagnetische Wellen) ein gleichzeitiger Ausfall beider Sensoreinheiten 21, 22 vermieden wird, was bei identischem Sensorprinzip der Fall sein könnte. Des Weiteren kann eine gegenseitige Beeinflussung der Sensoren S1, S2 (z. B. Übersprechen der Signale) vermieden werden.

Die erste Sensoreinheit 21 kann eine primäre Funktion für die Motorregelung bereitstellen und hierzu eine höhere Auflösung als die zweite Sensoreinheit 22 aufweisen.

Die zweite Sensoreinheit 22 kann eine sekundäre und/oder redundante Funktion für die Motorregelung bereitstellen und ggf. eine niedrigere Auflösung als die erste Sensoreinheit 21 aufweisen. Die Auflösung des zweiten Sensors S2 kann dabei so gewählt werden, dass die Motorregelung auch auf Basis von seinem Signal erfolgen kann. Im letzteren Falle braucht die Motorregelung nicht höchsten Ansprüchen an Akustik und Haptik genügen. Ziel der zweiten Sensoreinheit 22 kann eine Aufrechterhaltung der Funktion/Verfügbarkeit der Motorregelung sein.

Ein Vorteil von zwei Sensoreinheiten 21, 22 kann weiterhin darin liegen, dass die gegenseitige Überwachung und/oder Plausibilisierung der Sensoreinheiten 21, 22 im Normalbetrieb des Radaktuators 110 ermöglicht wird, bspw.:
- Plausibilisierung von Winkelsignalen von der ersten Sensoreinheit 21 zu der zweiten Sensoreinheit 22 und umgekehrt, bspw. mithilfe eines Verhältnisses zwischen den Winkelsignalen.
- Plausibilisierung der nach dem Noniusprinzip errechneten Steuerstangenposition gegenüber weiteren im Fahrzeug F vorliegenden Signalen, aus denen sich der Lenkwinkel berechnen lässt (z. B. Gierrate, Einzelraddrehzahlen, externe Sensoren usw.).
- Wenn die Sensoren S1, S2 mehrkanalig (vgl. Fig. 3) aufgebaut sind, kann die Plausibilisierung auch die jeweiligen Einzelkanäle K11, K12, K21, K22 der Sensoren S1, S2 einzeln berücksichtigen.

Sollte es zu einem Ausfall des primären Sensors S1 kommen, so kann der zweite Sensor S2 die Positionsbestimmung der Steuerstange übernehmen.

Wenn der zweite Sensor S2 eine geringere Auflösung bzw. Signalqualität aufweist als der erste Sensor S1, kann es vorteilhaft sein, das Regelverhalten der Motorregelung anzupassen. Dies kann u. A. auf mehrere Arten geschehen:
- Reduzierung der Dynamik des übergeordneten Regelkreises (Zahnstangenpositionsregelung);
- Zuschalten einer Dämpfungskomponente auf das Signal (z. B. Tiefpassfilter);
- Begrenzung von Gradienten und Amplituden des Signals (Soll-Zahnstangenposition)
- Umschalten auf andere Regler-Parametrierung, die für den Betrieb mit diesem Sensor angepasst wurde:
   Vorteilhaft für eine hochgenaue Berechnung der Zahnstangenposition kann sein, wenn die Position der Steuerstange aus beiden Sensoreinheiten 21, 22 beim Systemstart vorliegt.

Nach einem folgenden eventuellen Teilausfahl in einer der Sensoreinheiten 21, 22 kann die Weiterberechnung der Position der Steuerstange auch nur mit dem Signal erfolgen. Eine Zählung der Wellenumdrehungen kann dabei bspw. zusätzlich in die Weiterberechnung einfließen.

Die Berechnung des Winkels auf Basis des Offsetwertes vom Start kann vorteilhafterweise im Normalfall in Hintergrund laufen, sodass der Wert im Normalbetrieb ständig verfügbar ist und auch gegen die anderen verfügbaren Signale entsprechend der oben beschriebenen Methoden plausibilisiert werden kann.

Des Weiteren kann vorteilhaft sein, das eine oder mehrere der berechneten Winkel- bzw. Positionsinformationen inkl. eines zugeordneten Signals zum Status der Plausibilisierung auf einem oder mehreren Fahrzeugbussystemen zur Nutzung von anderen Steuergeräten im Fahrzeug F gesendet wird.

Wie es die Fig. 2 bis 4 zeigen, kann die erste Sensoreinheit 21 einen ersten Signalgeber M1, welcher drehfest mit der Rotorwelle 11 verbunden ist, und einen ersten Sensor S1, welcher insbesondere axial gesehen stirnseitig vor der Rotorwelle 11 und gegenüber dem ersten Signalgeber M1 angeordnet ist, aufweisen. Weiterhin kann die zweite Sensoreinheit 22 einen zweiten Signalgeber M2, welcher drehfest mit der Hilfswelle 12 verbunden ist, und einen zweiten Sensor S2, welcher insbesondere axial gesehen stirnseitig vor der Hilfswelle 12 und gegenüber dem zweiten Signalgeber M2 angeordnet ist, aufweisen.

Wie es die Fig. 3 und 4 zeigen, kann der erste Sensor S1 und/oder der zweite Sensor S2 an der Steuervorrichtung 40, insbesondere direkt an der Steuerplatine, angeordnet sein.

Wie es die Fig. 2 zeigt, kann die Getriebevorrichtung 30 ein Hauptgetriebeelement 31, insbesondere in Form eines Zahnrads, vorzugsweise eines Stirnrads, aufweisen, welches drehfest mit der Rotorwelle 11 verbunden ist und an welchem der erste Signalgeber M1 befestigt ist. Weiterhin kann die Getriebevorrichtung 30 mindestens ein Hilfsgetriebeelement 32, insbesondere in Form eines Zahnrads, vorzugsweise eines Stirnrads, aufweisen, welches drehfest mit der Hilfswelle 12 verbunden ist und an welchem der zweite Signalgeber M2 befestigt ist.

Wie es die Fig. 3 und 4 verdeutlichen, kann die Steuervorrichtung 40 eine erste Steuereinheit 41 und eine zweite Steuereinheit 42 aufweisen. Des Weiteren kann die erste Sensoreinheit 21 mindestens einen Kanal K11 zu einer ersten Steuereinheit 41 und mindestens einen Kanal K12 zu einer zweiten Steuereinheit 42 aufweisen. Zudem kann die zweite Sensoreinheit 22 mindestens einen Kanal K21 zu einer ersten Steuereinheit 41 (vgl. Fig. 3 und 4) und gegebenenfalls einen Kanal K22 zu einer zweiten Steuereinheit 42 (vgl. Fig. 3) aufweisen.

In Fig. 3 ist eine mögliche Verschaltung der Sensoren S1, S2 in Verbindung mit einer zweikanaligen und/oder zweiteiligen Steuervorrichtung 40 dargestellt. Diese besitzt den Vorteil, dass bei einer Abschaltung einer Steuereinheit 41 oder 42 immer noch beide Sensoren S1, S2 zur Verfügung stehen. Sollte es in diesem Falle weiterhin zu einem Fehler in einem der Sensoren S1, S2 kommen, so kann der verbleibende Sensor S1 oder S2 in Zusammenhang mit der verbleibenden Steuereinheit 41 oder 42 den weiteren Betrieb aufrechterhalten. Wenn bspw. ein Kanal K11, K12, K21, K22 ein ASIL B Relativ-Winkelsignal liefert, dann können die Steuereinheiten 41 und/oder 42 aus den jeweils beiden ASIL B Relativ- Winkelsignalen zwei ASIL D Relative-Winkel bestimmen. Aus den beiden ASIL D-Relativ-Winkeln kann dann ein ASIL-D Absolutwinkel bestimmt werden.

In einer Ausführungsform kann der zweite Sensor 2, dessen Aufgabe es ist, zusammen mit dem ersten Sensor S1 die Verfügbarkeit des Positionssignals aufrechtzuerhalten nur einkanalig ausgeführt werden (vgl. Fig. 4). In diesem Fall kann im Normalbetrieb die Positionsberechnung wie in der Ausführungsform der Fig. 3 erfolgen, da alle Signale auf der ersten Steuereinheit 41 zur Verfügung stehen. Kommt es zu einem fehlerbedingten Ausfall oder zu einer Abschaltung von der zweiten Steuereinheit 42, verändert sich diese Situation nicht. Kommt es zu einer Abschaltung von der ersten Steuereinheit 41, ist das System in der Lage, aufgrund der weiterhin verfügbaren Winkelinformationen von dem ersten Sensor S1 den Betrieb sicherzustellen, wenn auch bei eingeschränkter Verfügbarkeit. Das heißt, es sind ggf. Maßnahmen, wie z. B. Fahrerwarnungen und/oder ein Unterbinden des Betriebs nach einer bestimmten Betriebsdauer oder Kilometerleistung erforderlich. Wenn diese Lösungen im Rahmen der zu erreichenden Sicherheitsanforderungen umgesetzt werden können, stellt diese Ausführungsform eine einfachere und damit kostenreduzierte Variante des Systems dar. Diese Ausführungsform berücksichtigt die Eigenschaft, dass eine hochgenaue Berechnung der Steuerstangenposition aus beiden Sensoren S1, S2 beim Systemstart erfolgen kann. Die Weiterberechnung kann auch nur mit dem Signal von dem ersten Sensor S1 auf Basis der Kenntnis der Position beim Start erfolgen. Eine Zählung der Sensorumdrehungen kann zusätzlich die Bestimmung einfließen.

Vorteile und besondere Merkmale im Rahmen der vorliegenden Offenbarung können insbesondere wie folgt herausgestellt werden:
- Unterschiedliche Messprinzipen. Bei externer Störung, z. B. durch Magnetfelder, ist es so wesentlich unwahrscheinlicher, dass beide Sensoreinheiten 21, 22 gleichzeitig gestört werden.
- Anordnung des feststehenden Sensorteils (Sensoren S1, S2) vor dem rotierenden Teil (Signalgeber M1, M2) (siehe Fig. 3 und 4).
- Redundanter Aufbau der Sensoreinheiten 21, 22.
- Redundanter Aufbau der Steuereinheiten 41, 42.
- Plausibilisierung von Sensorwerten der Sensoreinheiten 21, 22.

Weiterhin ist es denkbar, dass die Sensorvorrichtung 20 auch mehr als zwei Sensoreinheiten 21, 22 umfassen kann, welche dann unterschiedlich oder gleich zueinander übersetzt sein können, um die Genauigkeit und/oder Robustheit der Winkelmessung/Positionsbestimmung zu erhöhen.

### Bezugszeichenliste

- F: Fahrzeug
- S: Steer-by-Wire-System
- L: Lenkrad
- 120: Force-Feedback-Aktuator
- 110: Radaktuator Steuerstange
- 100: Antriebseinheit
- 10: Motor
- 11: Rotorwelle
- 12: Hilfswelle
- 20: Sensorvorrichtung
- 21: Sensoreinheit
- 22: Sensoreinheit
- M1: Signalgeber
- M2: Signalgeber
- S1: Sensor
- S2: Sensor
- 30: Getriebevorrichtung
- 31: Hauptgetriebeelement
- 32: Hilfsgetriebeelement
- 40: Steuervorrichtung
- 41: Steuereinheit
- 42: Steuereinheit
- K11: Kanal
- K12: Kanal
- K21: Kanal
- K22: Kanal

## Patentansprüche

1. Antriebseinheit (100) für einen Radaktuator (110) eines Steer-by-Wire-Systems (S) für ein Fahrzeug (F), aufweisend:
- einen Motor (10) zum Bereitstellen einer Antriebsleistung an eine Steuerstange des Radaktuators (110),
- eine Sensorvorrichtung (20) zum Bestimmen einer Position der Steuerstange,
wobei die Sensorvorrichtung (20) eine erste Sensoreinheit (21) und mindestens eine zweite Sensoreinheit (22) aufweist,
wobei die erste Sensoreinheit (21) dazu ausgeführt ist, einen Winkel einer Rotorwelle (11) des Motors (10) zu erfassen,
und wobei die zweite Sensoreinheit (22) dazu ausgeführt ist, einen Winkel einer Hilfswelle (12) zu erfassen, die mit der Rotorwelle (11) in einer mechanischen Wirkverbindung angeordnet ist,
- eine Getriebevorrichtung (30) zum Bereitstellen der mechanischen Wirkverbindung zwischen der Rotorwelle (11) und der Hilfswelle (12),
- und eine Steuervorrichtung (40) zum Ansteuern der Sensorvorrichtung (20) und/oder zum Bestimmen einer Position der Steuerstangette des Radaktuators (110),
**dadurch gekennzeichnet, dass** die erste Sensoreinheit (21) und die zweite Sensoreinheit (22) unterschiedliche Messprinzipien aufweisen.

2. Antriebseinheit (100) nach Anspruch 1,
wobei die erste Sensoreinheit (21) einen ersten Signalgeber (M1), welcher drehfest mit der Rotorwelle (11) verbunden ist, und einen ersten Sensor (S1), welcher insbesondere axial gesehen stirnseitig vor der Rotorwelle (11) und gegenüber dem ersten Signalgeber (M1) angeordnet ist, aufweist,
und/oder wobei die zweite Sensoreinheit (22) einen zweiten Signalgeber (M2), welcher drehfest mit der Hilfswelle (12) verbunden ist, und einen zweiten Sensor (S2), welcher insbesondere axial gesehen stirnseitig vor der Hilfswelle (12) und gegenüber dem zweiten Signalgeber (M2) angeordnet ist, aufweist,
und/oder wobei der erste Sensor (S1) und/oder der zweite Sensor (S2) an der Steuervorrichtung (40) angeordnet sind.

3. Antriebseinheit (100) nach Anspruch 1 oder 2,
wobei die erste Sensoreinheit (21) eine höhere Auflösung und/oder Signalqualität aufweist als die zweite Sensoreinheit (22),
und/oder wobei die erste Sensoreinheit (21) und die zweite Sensoreinheit (22) jeweils mindestens einen von den folgenden Sensoren aufweisen können:
- einen induktiven Sensor,
- einen magnetoresistiven Sensor,
- einen Hall-Sensor,
- einen Drehwinkelsensor, usw.,
und/oder wobei die erste Sensoreinheit (21) und die zweite Sensoreinheit (22) jeweils mindestens eine von den folgenden Messprinzipien aufweisen können:
- elektromechanisch,
- magnetisch,
- induktiv,
- optisch, usw.

4. Antriebseinheit (100) nach einem der vorhergehenden Ansprüche,
wobei die Getriebevorrichtung (30) ein Hauptgetriebeelement (31), insbesondere in Form eines Zahnrads, aufweist, welches drehfest mit der Rotorwelle (11) verbunden ist und an welchem der erste Signalgeber (M1) befestigt ist,
und/oder wobei die Getriebevorrichtung (30) mindestens ein Hilfsgetriebeelement (32), insbesondere in Form eines Zahnrads, aufweist, welches drehfest mit der Hilfswelle (12) verbunden ist und an welchem der zweite Signalgeber (M2) befestigt ist.

5. Antriebseinheit (100) nach einem der vorhergehenden Ansprüche,
wobei die Steuervorrichtung (40) eine erste Steuereinheit (41) und eine zweite Steuereinheit (42) aufweist,
und/oder wobei die erste Sensoreinheit (21) mindestens einen Kanal (K11) zu einer ersten Steuereinheit (41) und mindestens einen Kanal (K12) zu einer zweiten Steuereinheit (42) aufweist,
und/oder wobei die zweite Sensoreinheit (22) mindestens einen Kanal (K21) zu einer ersten Steuereinheit (41) und gegebenenfalls einen Kanal (K22) zu einer zweiten Steuereinheit (42) aufweist.

6. Radaktuator (110) für ein Steer-by-Wire-System (S) eines Fahrzeuges (F), aufweisend eine Steuerstange zum Umsetzen einer Lenkanforderung und eine Antriebseinheit (100) nach einem der vorhergehenden Ansprüche zum Bereitstellen einer Antriebsleistung an die Steuerstange (101), um die Lenkanforderung umzusetzen.

7. Steer-by-Wire-System (S) für ein Fahrzeug (F) mit einem Radaktuator (110) nach dem vorhergehenden Anspruch.

8. Fahrzeug (F), insbesondere ein hochautomatisiert und/oder autonom fahrendes Fahrzeug, mit einem Steer-by-Wire-System (S) nach dem vorhergehenden Anspruch.

9. Verfahren zum Bestimmten einer Position der Steuerstange eines Radaktuators (110) mithilfe einer Antriebseinheit (100) nach einem der vorhergehenden Ansprüche 1 bis 5, aufweisend:
Verwenden der ersten Sensoreinheit (21), um einen Winkel der Rotorwelle (11) des Motors (10) zu erfassen,
- Verwenden der zweiten Sensoreinheit (22), um einen Winkel der Hilfswelle (12) zu erfassen,
- Bestimmten einer Position der Steuerstange des Radaktuators (110) mithilfe von Messwerten der ersten Sensoreinheit (21) und/oder mithilfe von Messwerten der zweiten Sensoreinheit (22).

10. Verfahren nach dem vorhergehenden Anspruch,
wobei die Messwerte der ersten Sensoreinheit (21) zum Plausibilisieren der Messwerte der zweiten Sensoreinheit (22) verwendet werden.

11. Verfahren nach einem der vorhergehenden Ansprüche 9 oder 10,
wobei verfügbare Messwerte der ersten Sensoreinheit (21) und/oder verfügbare Messwerte der zweiten Sensoreinheit (22) kombiniert werden, um die Position der Steuerstange des Radaktuators (110) zu bestimmen,
und/oder wobei bei einem Start des Fahrzeuges (F) ein Offset zwischen Messwerten der ersten Sensoreinheit (21) und den Messwerten der zweiten Sensoreinheit (22) bestimmt wird, um bei einem Ausfall einer der Sensoreinheiten (21, 22) eine Bestimmung der Position der Steuerstange mit nur einer Sensoreinheit (21, 22) weiterhin durchführen zu können,
und/oder wobei die Bestimmung der Position der Steuerstange mithilfe eines Offsets zwischen Messwerten der ersten Sensoreinheit (21) und den Messwerten der zweiten Sensoreinheit (22) parallel zum primären Bestimmen der Position der Steuerstange durchgeführt wird, um bei einem Ausfall einer der Sensoreinheiten (21, 22) eine Bestimmung der Position der Steuerstange mit nur einer Sensoreinheit (21, 22) bereitstellen zu können.

12. Verfahren nach einem der vorhergehenden Ansprüche 9 bis 11,
wobei, wenn die erste Sensoreinheit (21) und/oder die zweite Sensoreinheit (22) ausfällt, ein Regelverfahren für eine Regelung des Motors (10) angepasst wird,
wobei insbesondere, wenn die erste Sensoreinheit (21) ausfällt, mindestens eine von den folgenden Maßnahmen durchgeführt wird:
- Reduktion einer Dynamik für eine übergeordnete Regelung, insbesondere einer Regelung der Position der Steuerstange,
- Zuschalten einer Dämpfungskomponente, bspw. eines Tiefpassfilters, auf ein Signal der zweiten Sensoreinheit (22),
- Begrenzen von Gradienten und/oder Amplituden eines Signals für eine Sollposition der Steuerstange,
- Anpassen von Regelparameter für die Regelung des Motors (10) und/oder für die Regelung der Position der Steuerstange.

## Claims

1. Drive unit (100) for a wheel actuator (110) of a steer-by-wire system (S) for a vehicle (F), comprising:
- a motor (10) for providing a drive power to a control rod of the wheel actuator (110),
- a sensor device (20) for determining a position of the control rod,
the sensor device (20) comprising a first sensor unit (21) and at least one second sensor unit (22),
the first sensor unit (21) being designed to detect an angle of a rotor shaft (11) of the motor (10),
and the second sensor unit (22) being designed to detect an angle of an auxiliary shaft (12) which is arranged so as to be mechanically operatively connected to the rotor shaft (11),
- a transmission device (30) for mechanically operatively connecting the rotor shaft (11) and the auxiliary shaft (12),
- and a control device (40) for open-loop controlling the sensor device (20) and/or for determining a position of the control rod of the wheel actuator (110), **characterized in that** the first sensor unit (21) and the second sensor unit (22) have different measuring principles.

2. Drive unit (100) according to claim 1,
wherein the first sensor unit (21) comprises a first signal transmitter (M1) which is connected to the rotor shaft (11) for conjoint rotation, and a first sensor (S1) which is arranged, in particular as seen axially, on the end face in front of the rotor shaft (11) and opposite the first signal transmitter (M1),
and/or wherein the second sensor unit (22) comprises a second signal transmitter (M2) which is connected to the auxiliary shaft (12) for conjoint rotation, and a second sensor (S2) which is arranged, in particular as seen axially, on the end face in front of the auxiliary shaft (12) and opposite the second signal transmitter (M2),
and/or wherein the first sensor (S1) and/or the second sensor (S2) are arranged on the control device (40).

3. Drive unit (100) according to claim 1 or 2,
wherein the first sensor unit (21) has a higher resolution and/or signal quality than the second sensor unit (22),
and/or wherein the first sensor unit (21) and the second sensor unit (22) can each comprise at least one of the following sensors:
- an inductive sensor,
- a magnetoresistive sensor,
- a Hall sensor,
- a rotation angle sensor, etc.,
and/or wherein the first sensor unit (21) and the second sensor unit (22) can each have at least one of the following measuring principles:
- electromechanical,
- magnetic,
- inductive,
- optical, etc.

4. Drive unit (100) according to any of the preceding claims,
wherein the transmission device (30) comprises a main transmission element (31), in particular in the form of a gearwheel, which is connected to the rotor shaft (11) for conjoint rotation and to which the first signal transmitter (M1) is fastened,
and/or wherein the transmission device (30) comprises at least one auxiliary transmission element (32), in particular in the form of a gearwheel, which is connected to the auxiliary shaft (12) for conjoint rotation and to which the second signal transmitter (M2) is fastened.

5. Drive unit (100) according to any of the preceding claims,
wherein the control device (40) comprises a first control unit (41) and a second control unit (42),
and/or wherein the first sensor unit (21) comprises at least one channel (K11) to a first control unit (41) and at least one channel (K12) to a second control unit (42),
and/or wherein the second sensor unit (22) comprises at least one channel (K21) to a first control unit (41) and optionally one channel (K22) to a second control unit (42).

6. Wheel actuator (110) for a steer-by-wire system (S) of a vehicle (F), comprising a control rod for implementing a steering request and a drive unit (100) according to any of the preceding claims for providing a drive power to the control rod (101) in order to implement the steering request.

7. Steer-by-wire system (S) for a vehicle (F), comprising a wheel actuator (110) according to the preceding claim.

8. Vehicle (F), in particular a highly automated and/or autonomously driving vehicle, comprising a steer-by-wire system (S) according to the preceding claim.

9. Method for determining a position of the control rod of a wheel actuator (110) with the aid of a drive unit (100) according to any of the preceding claims 1 to 5, comprising:
using the first sensor unit (21) to detect an angle of the rotor shaft (11) of the motor (10),
- using the second sensor unit (22) to detect an angle of the auxiliary shaft (12),
- determining a position of the control rod of the wheel actuator (110) with the aid of measured values from the first sensor unit (21) and/or with the aid of measured values from the second sensor unit (22).

10. Method according to the preceding claim,
wherein the measured values from the first sensor unit (21) are used to check the plausibility of the measured values from the second sensor unit (22).

11. Method according to either of the preceding claims 9 and 10,
wherein available measured values from the first sensor unit (21) and/or available measured values from the second sensor unit (22) are combined to determine the position of the control rod of the wheel actuator (110),
and/or wherein, when the vehicle (F) is started, an offset between measured values from the first sensor unit (21) and the measured values from the second sensor unit (22) is determined in order to be able to continue to determine the position of the control rod using only one sensor unit (21, 22) in the event of a failure of one of the sensor units (21, 22),
and/or wherein the position of the control rod is determined with the aid of an offset between measured values from the first sensor unit (21) and the measured values from the second sensor unit (22) in parallel with primarily determining the position of the control rod in order to be able to determine the position of the control rod using only one sensor unit (21, 22) in the event of a failure of one of the sensor units (21, 22).

12. Method according to any of the preceding claims 9 to 11,
wherein, if the first sensor unit (21) and/or the second sensor unit (22) fails, a control method for closed-loop controlling the motor (10) is adjusted,
wherein in particular if the first sensor unit (21) fails, at least one of the following measures is carried out:
- reducing dynamics for a higher-level closed-loop control, in particular a closed-loop control of the position of the control rod,
- connecting an attenuation component, e.g., a low-pass filter, to a signal from the second sensor unit (22),
- limiting gradients and/or amplitudes of a signal for a desired position of the control rod,
- adjusting control parameters for closed-loop controlling the motor (10) and/or for closed-loop controlling the position of the control rod.

## Revendications

1. Unité d'entraînement (100) pour un actionneur de roue (110) d'un système de direction à commande électrique (S) pour un véhicule (F), présentant :
- un moteur (10) pour fournir une puissance d'entraînement à une bielle de commande de l'actionneur de roue (110),
- un dispositif capteur (20) pour déterminer une position de la bielle de commande,
dans laquelle le dispositif capteur (20) présente une première unité de capteur (21) et au moins une seconde unité de capteur (22),
dans laquelle la première unité de capteur (21) est conçue pour détecter un angle d'un arbre de rotor (11) du moteur (10),
et dans laquelle la seconde unité de capteur (22) est conçue pour détecter un angle d'un arbre auxiliaire (12) qui est agencé dans une liaison mécanique active avec l'arbre de rotor (11),
- un dispositif de transmission (30) pour fournir la liaison mécanique active entre l'arbre de rotor (11) et l'arbre auxiliaire (12),
- et un dispositif de commande (40) pour commander le dispositif capteur (20) et/ou pour déterminer une position de la bielle de commande de l'actionneur de roue (110), **caractérisée en ce que** la première unité de capteur (21) et la seconde unité de capteur (22) présentent des principes de mesure différents.

2. Unité d'entraînement (100) selon la revendication 1,
dans laquelle la première unité de capteur (21) présente un premier générateur de signaux (M1), qui est relié de manière solidaire en rotation à l'arbre de rotor (11), et un premier capteur (S1), qui est agencé en particulier vu axialement côté frontal devant l'arbre de rotor (11) et en face du premier générateur de signaux (M1),
et/ou dans laquelle la seconde unité de capteur (22) présente un second générateur de signaux (M2), qui est relié de manière solidaire en rotation à l'arbre auxiliaire (12), et un second capteur (S2), qui est agencé en particulier vu axialement côté frontal devant l'arbre auxiliaire (12) et en face du second générateur de signaux (M2),
et/ou dans laquelle le premier capteur (S1) et/ou le second capteur (S2) sont agencés sur le dispositif de commande (40).

3. Unité d'entraînement (100) selon la revendication 1 ou 2,
dans laquelle la première unité de capteur (21) présente une résolution et/ou une qualité de signal plus élevée(s) que la seconde unité de capteur (22),
et/ou dans laquelle la première unité de capteur (21) et la seconde unité de capteur (22) peuvent présenter respectivement au moins l'un des capteurs suivants :
- un capteur inductif,
- un capteur magnétorésistif,
- un capteur à effet Hall,
- un capteur d'angle de rotation, etc,
et/ou dans laquelle la première unité de capteur (21) et la seconde unité de capteur (22) peuvent présenter respectivement au moins l'un des principes de mesure suivants :
- électromécanique,
- magnétique,
- inductif,
- optique, etc.

4. Unité d'entraînement (100) selon l'une des revendications précédentes,
dans laquelle le dispositif de transmission (30) présente un élément de transmission principal (31), en particulier sous la forme d'une roue dentée, qui est relié de manière solidaire en rotation à l'arbre de rotor (11) et sur lequel est fixé le premier générateur de signaux (M1),
et/ou dans laquelle le dispositif de transmission (30) présente au moins un élément de transmission auxiliaire (32), en particulier sous la forme d'une roue dentée, qui est relié de manière solidaire en rotation à l'arbre auxiliaire (12) et sur lequel est fixé le second générateur de signaux (M2).

5. Unité d'entraînement (100) selon l'une des revendications précédentes,
dans laquelle le dispositif de commande (40) présente une première unité de commande (41) et une seconde unité de commande (42),
et/ou dans laquelle la première unité de capteur (21) présente au moins un canal (K11) vers une première unité de commande (41) et au moins un canal (K12) vers une seconde unité de commande (42),
et/ou dans laquelle la seconde unité de capteur (22) présente au moins un canal (K21) vers une première unité de commande (41) et éventuellement un canal (K22) vers une seconde unité de commande (42).

6. Actionneur de roue (110) pour un système de direction à commande électrique (S) d'un véhicule (F), présentant une bielle de commande pour convertir une demande de direction et une unité d'entraînement (100) selon l'une des revendications précédentes pour fournir une puissance d'entraînement à la bielle de commande (101) afin de convertir la demande de direction.

7. Système de direction à commande électrique (S) pour un véhicule (F) comportant un actionneur de roue (110) selon la revendication précédente.

8. Véhicule (F), en particulier véhicule à conduite hautement automatisée et/ou autonome, comportant un système de direction à commande électrique (S) selon la revendication précédente.

9. Procédé de détermination d'une position de la bielle de commande d'un actionneur de roue (110) à l'aide d'une unité d'entraînement (100) selon l'une des revendications précédentes 1 à 5, présentant :
l'utilisation de la première unité de capteur (21) pour détecter un angle de l'arbre de rotor (11) du moteur (10),
- l'utilisation de la seconde unité de capteur (22) pour détecter un angle de l'arbre auxiliaire (12),
- la détermination d'une position de la bielle de commande de l'actionneur de roue (110) à l'aide de valeurs de mesure de la première unité de capteur (21) et/ou à l'aide de valeurs de mesure de la seconde unité de capteur (22).

10. Procédé selon la revendication précédente,
dans lequel les valeurs de mesure de la première unité de capteur (21) sont utilisées pour garantir la plausibilité des valeurs de mesure de la seconde unité de capteur (22).

11. Procédé selon l'une des revendications précédentes 9 ou 10,
dans lequel des valeurs de mesure disponibles de la première unité de capteur (21) et/ou des valeurs de mesure disponibles de la seconde unité de capteur (22) sont combinées pour déterminer la position de la bielle de commande de l'actionneur de roue (110),
et/ou dans lequel un décalage entre des valeurs de mesure de la première unité de capteur (21) et des valeurs de mesure de la seconde unité de capteur (22) est déterminé lors d'un démarrage du véhicule (F), afin de pouvoir continuer à réaliser une détermination de la position de la bielle de commande avec une seule unité de capteur (21, 22) en cas de défaillance de l'une des unités de capteur (21, 22),
et/ou dans lequel la détermination de la position de la bielle de commande est réalisée à l'aide d'un décalage entre des valeurs de mesure de la première unité de capteur (21) et des valeurs de mesure de la seconde unité de capteur (22) parallèlement à la détermination primaire de la position de la bielle de commande, afin de pouvoir fournir une détermination de la position de la bielle de commande avec une seule unité de capteur (21, 22) en cas de défaillance de l'une des unités de capteur (21, 22).

12. Procédé selon l'une des revendications précédentes 9 à 11,
dans lequel, lorsque la première unité de capteur (21) et/ou la seconde unité de capteur (22) sont défaillantes, un procédé de régulation est adapté pour une régulation du moteur (10),
dans lequel, en particulier, lorsque la première unité de capteur (21) est défaillante, au moins l'une des actions suivantes est réalisée :
- réduction d'une dynamique pour une régulation d'ordre supérieur, en particulier une régulation de la position de la bielle de commande,
- ajout d'une composante d'atténuation, par exemple d'un filtre passe-bas, à un signal de la seconde unité de capteur (22),
- limitation de gradients et/ou d'amplitudes d'un signal pour une position de consigne de la bielle de commande,
- adaptation de paramètres de régulation pour la régulation du moteur (10) et/ou pour la régulation de la position de la bielle de commande.
